Europäisches Patentamt

European Patent Office

Office européen des brevets

(11) Veröffentlichungsnummer: **0 351 703 B1**

(19)

(12) **EUROPÄISCHE PATENTSCHRIFT**

(45) Veröffentlichungstag der Patentschrift:
08.01.92 Patentblatt 92/02

(21) Anmeldenummer: 89112736.7

(22) Anmeldetag: 12.07.89

(51) Int. Cl.⁵: **E04G 7/30**

(54) **Anschlussausbildung für Horizontalträger von Gerüstböden.**

(30) Priorität: 21.07.88 DE 3824823

(43) Veröffentlichungstag der Anmeldung:
24.01.90 Patentblatt 90/04

(45) Bekanntmachung des Hinweises auf die
Patenterteilung:
08.01.92 Patentblatt 92/02

(84) Benannte Vertragsstaaten:
AT BE CH DE ES FR GB GR IT LI LU NL SE

(56) Entgegenhaltungen:
FR-A- 2 288 199
FR-A- 2 520 482
FR-A- 2 553 456

(73) Patentinhaber: Langer, Ruth, geb. Layher
Im Weinberg 13
W-7129 Güglingen (DE)

(72) Erfinder: Langer, Ruth, geb. Layher
Im Weinberg 13
W-7129 Güglingen (DE)

(74) Vertreter: Utermann, Gerd, Dipl.-Ing.
Kilianstrasse 7 (Kilianspassage) Postfach
3525
W-7100 Heilbronn (DE)

## Beschreibung

Die Erfindung betrifft eine Anschlußausbildung für Horizontalträger von Gerüstböden bestehend aus einem Profil, einer Scheibe und einem Anschlußkopf an Gerüsten mit vertikalen Stielen, welche im einem Rastersystem entsprechenden Abstand horizontale Lochscheiben aufweisen, auf die Anschlußköpfe von der Tragstruktur dienenden Gerüstelementen aufsteckbar und mit durchsteckbaren Keilen sicherbar sind, wobei die Anschlußköpfe mit ihren vertikalen Seitenflächen keilartig zusammenlaufend ausgebildet sind, etwa in der Vertikal-Mitte einen horizontalen Scheiben-Schlitz zum Aufstecken auf die Lochscheiben aufweisen und in ihren oberen und unteren Stützteilen mit vertikal durchlaufenden Keilöffnungen versehen sind (wie z.B. aus der FR-A-2288199 bekannt ist).

Anschlußausbildungen für Gerüstelemente sind nach dem jeweiligen Gerüstsystem passend in vielerlei Form ausgestaltet. Wegen des großen Gewichts von Bauteilen aus Stahl und der Notwendigkeit nicht brennbare Gerüste schnell und leicht auch in beengten Verhältnissen auf- und abzubauen, sind aus Leichtmetall bestehende Gerüste in vielerlei Form bekannt geworden. Die an den Anschlußknoten einzuleitenden und abzustützenden Kräfte sind jedoch so groß, daß man bisher nahezu ausschließlich aus Stahl bestehende Anschlußköpfe verwendet hat, die entweder durch Preß- und Verformungsverbindungen oder durch Schweißverbindungen mit den Gerüstelementen, wie Rohren und U-Profilen, verbunden wurden. Dabei gibt es dann auch bei Leichtmetall-Rohren an den Enden große Gewichtsanhäufungen, die für die Handhabung hinderlich sind. Darüber hinaus bergen unterschiedliche Werkstoffe mit unterschiedlichen Eigenschaften stets die Gefahr von Schwierigkeiten in sich. U-förmige Horizontal oder Tragriegel sind bisher stets aus Stahl gefertigt worden. Für Leichtmetall-Gerüste werden jedoch durchgängig Leichtmetallteile gewünscht.

Der Erfindung liegt die Aufgabe zugrunde, für einen Horizontalträger oder Tragriegel aus Leichtmetall einen die auftretenden Kräfte unter optimalen Bedingungen aufnehmenden und weiterleitenden Anschlußkopf aus Leichtmetall zu schaffen, der geeignete, auch Platz und Material sparende Ausgestaltungen aufweist, die es gestatten, ihn die Materialwerte möglichst nicht beeinflussend mit dem Leichtmetall des U-Profiles zu verschweißen.

Erfindungsgemäß ist vorgesehen, daß die Anschlußköpfe aus gegossenem Leichtmetall bestehen und jeweils eine zu einem nach oben offenen, aus Leichtmetall bestehenden U-Profil passende, für das Verschweißen geeignete Ausbildung des Verbindungsbereiches aufweisen, wobei an jeder Wand des U-Profils ein nach innen ragender Schweißlappen des Anschlußkopfes anliegt, dessen Schweißnaht-Kante parallel unterhalb der verstärkten und innen unten abgeschrägten Auflage-Randrippe des U-Profiles liegt und wobei der dem unteren Horizontalsteg des U-Profils anliegende Kopfbereich eine in das Innere des U-Profils reichende Schweiß-Hilfs-Rippe aufweist und wobei der Scheiben-Schlitz im Bereich seines inneren Grundes sich auf das Maß der Scheibendicke verjüngend gestaltet ist und die mit Vertiefungen gebildeten Profilgestaltungen der Außenflächen des Kopfes versteifende Randbereiche neben den Keilöffnungen aufweisen.

Bei aus Stahl bestehenden U-Profilen und ihren in der Praxis auch schon mit Lappen angeschweißten Stahlköpfen brauchte man nicht so genau auf die optimale Gestaltung aller Bereiche des Kopfes zu achten, weil die Festigkeitswerte höher sind als bei Leichtmetall. Demgemäß konnte man auch die Schweißnähte anders legen. Durch die Erfindung ist nun für Leichtmetall eine Gestaltung gefunden, bei der das U-Profil eine nach innen verstärkte Auflage-Randrippe aufweist, auf die die hakenförmigen Einhängeklauen der Gerüstböden ohne übermäßige Abnutzung vielfach und langjährig aufgelegt werden können, wobei die Einbau-Abmessungen gegenüber den entsprechenden Abmessungen in Stahl nicht geändert zu werden brauchen. Dabei ist der innere, untere Rand der Auflage-Randrippe zusammen mit dem oberen Randbereich des jeweiligen Schweißlappens so gestaltet, daß sich ein Aufnahmeraum ergibt, in dem man eine geeignete Schweißnaht unterbringen kann, insbesondere wird man den Raum so gestalten, daß man eine V-Naht unterbringen kann. Die Länge des Schweißlappens ergibt sich aus den Festigkeitsbedürfnissen und kann vom Fachmann in der ihm geläufigen Weise ermittelt werden. Während bei Stahl kurze Lappen mit senkrechter Schweißung und Randschweißungen üblich war, wird hier nun jeweils eine parallel zum Auflagerand verlaufende Naht vorgesehen, die günstigere Kräfteeinleitungen ermöglicht und sich den Bedürfnissen bei Leichtmetall besser anpaßt. Dabei kann auch berücksichtigt werden, daß die Festigkeitswerte des Leichtmetalls infolge der Schweißung sich verringern. Hier hat man einen relativ großen Abstand zum Auflagerand und die stärkste Schwächung tritt in einem gewissen Abstand von der größten Belastung des Leichtmetalles ein, so daß ein guter Ausgleich gefunden ist. Im übrigen wird der Kopf nur außenseitig mit dem Leichtmetall-U-Profil verschweißt. Im Bereich der Schweißlappen ist eine ausreichende Unterstützung und Materialanhäufung für eine geeignete Verschweißung ohnehin gegeben. Im unteren Bereich des Anschlußkopfes, der dem Horizontalsteg anliegt, wird innenseitig zur Vereinfachung der Herstellung keine Schweißverbindung vorgesehen. Wegen der Abstützung des flüssigwerdenden Materials beim Schweißen von außen, der Bildung eines sogenannten Schweißbades, sieht die Erfindung im unteren Randbereich am Kopf eine Schweiß-Hilfs-Rippe vor, die sich in den Innenbereich

2

des U-Profiles hineinerstreckt und dort optimale Schweißbedingungen bietet. Im übrigen ist der Kopf gegenüber einem ähnlichen Kopf aus Stahl dadurch umgestaltet, daß man zwar den Außenbereich des Scheiben-Schlitzes mit dem für solche Gerüste üblichen großen Spiel von mehreren mm ausführt, so daß man die Anschluss-Köpfe gut aufstecken kann, den Scheiben-Schlitz jedoch in Richtung auf seinen inneren Grund sich verjüngend gestaltet, so daß er am Grund nur noch ein ganz geringes Spiel, also praktisch genau das Maß der Scheibendicke aufweist. Dadurch wird im Bereich höchster Kräfte im Anschlußkopf eine größere Materialanhäufung als bei Stahl-Anschlußköpfen dieser Art ermöglicht und somit die Spannung verringert. Darüberhinaus werden auch die Randbereiche neben den Keilöffnungen, den hohen Spannungen und geringeren Materialfestigkeiten gegenüber Stahl durch die Gestaltung besser angepaßt und es wird somit bei im Grundriß gleichen Außenabmessungen wie für Stahl ein Horizontalträger mit Leichtmetall-Anschlußkopf geschaffen, dessen Realisierung mangels geeigneter Ausgestaltung bisher nicht zu erwarten war. Die günstige Gestaltung zum Schweißen von Leichtmetallteilen ermöglicht es nun auf einen Anschlußkopf aus Stahl zu verzichten, dessen Befestigung an einem Leichtmetall-U-Profil nur mit entsprechen großen und langen Eingriffteilen in den Endbereichen des Tra-griegels möglich wäre. Diese Befestigungteile würden den Raum versperren, in dem die Krallen üblicher Gerüstböden angreifen.Weitere Ausgestaltungen, Einzelheiten, Merkmale und Vorteile der Erfindung sind auch in dem nachfolgenden, anhand der Zeichnungen abgehandelten Beschreibungsteil behandelt.

Ein Ausführungsbeispiel der Erfindung wird nachfolgend beschrieben :

Es zeigen :

Fig. 1    Die Schrägansicht eines Gerüstteiles mit Tragriegel und eingehängtem Gerüstboden ;

Fig. 2    die Teil-Draufsicht auf einen an einer halb dargestellten Lochscheibe angeschlossenen Tragriegel, wobei der halbe Stiel im Schnitt dargestellt ist ;

Fig. 3    einen Vertikalschnitt längs der Linie 3-3 durch den Anschluß an der Lochscheibe ;

Fig. 4    ein Schrägbild vom Ende des Tragriegels mit Anschlußkopf, teilweise aufgebrochen ;

Fig. 5    eine Draufsicht auf das Tragriegel-Ende mit Anschlußkopf ;

Fig. 6    eine Seitenansicht des Endes des Tragriegels mit Anschlußkopf nach Fig. 5 ;

Fig. 7    eine Ansicht von unten auf das Endes des Tragriegels mit Anschlußkopf ;

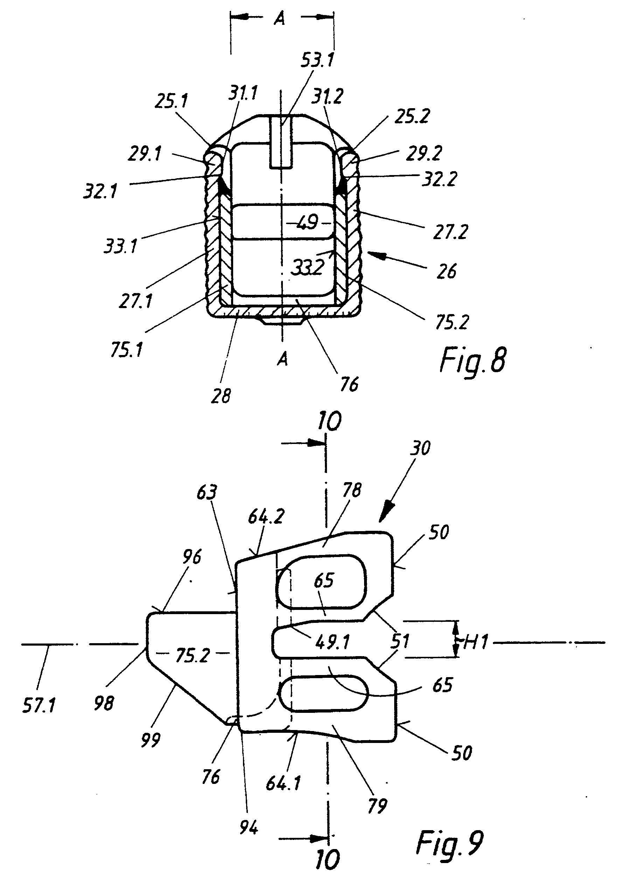

Fig. 8    einen Schnitt längs der Linie 8-8 in Fig. 5 ;

Fig. 9    eine Seitenansicht des Anschlußkopfs allein ohne Tragriegel ;

Fig. 10    einen vergrößerten Vertikalquerschnitt längs der Linie 10-10 in Fig. 9 und 11 ;

Fig. 11    einen dem Maßstab der Fig. 10 entsprechenden Vertikallängsschnitt längs der Linie 11-11 in Fig. 10 durch den Anschlußkopf allein.

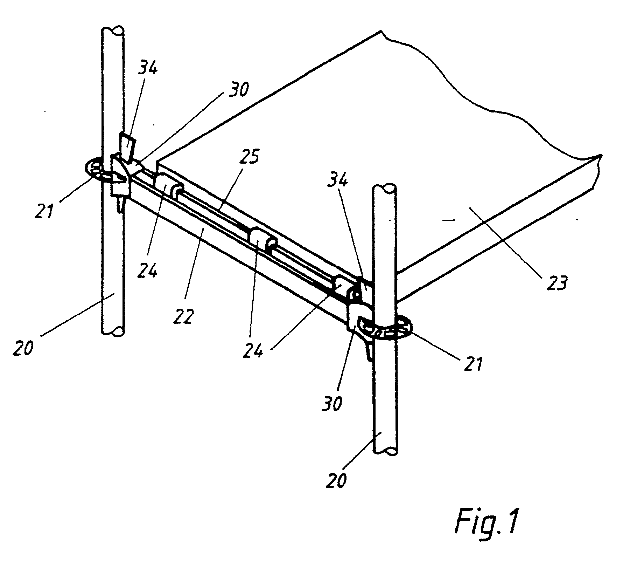

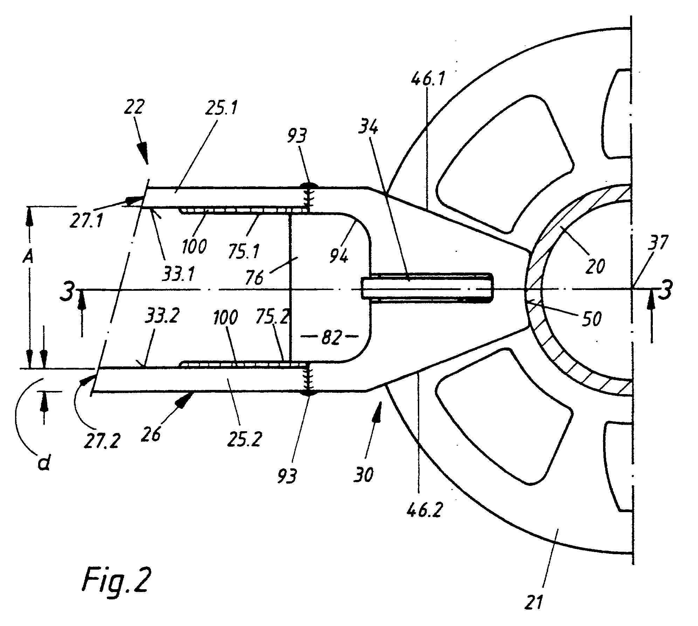

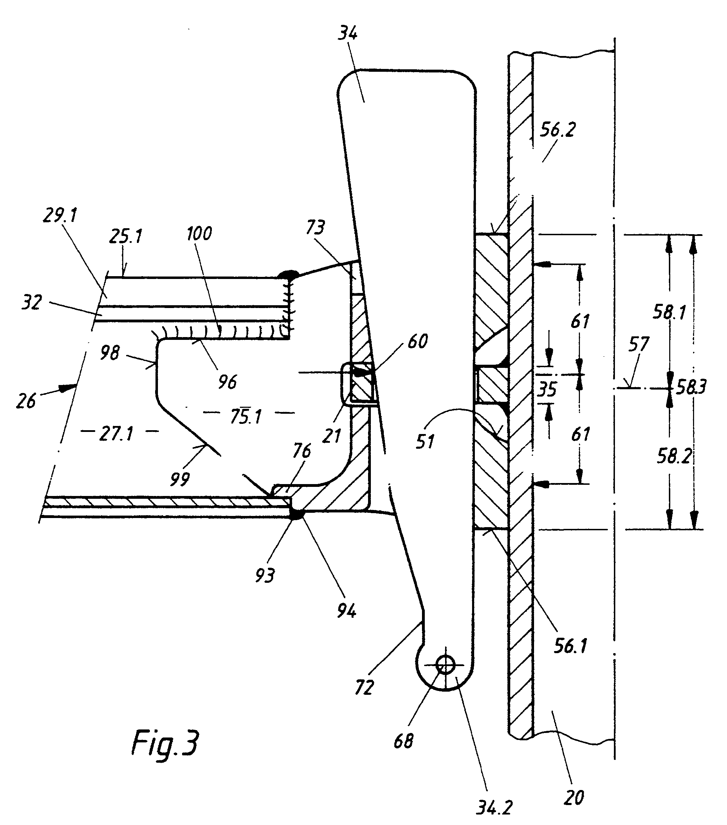

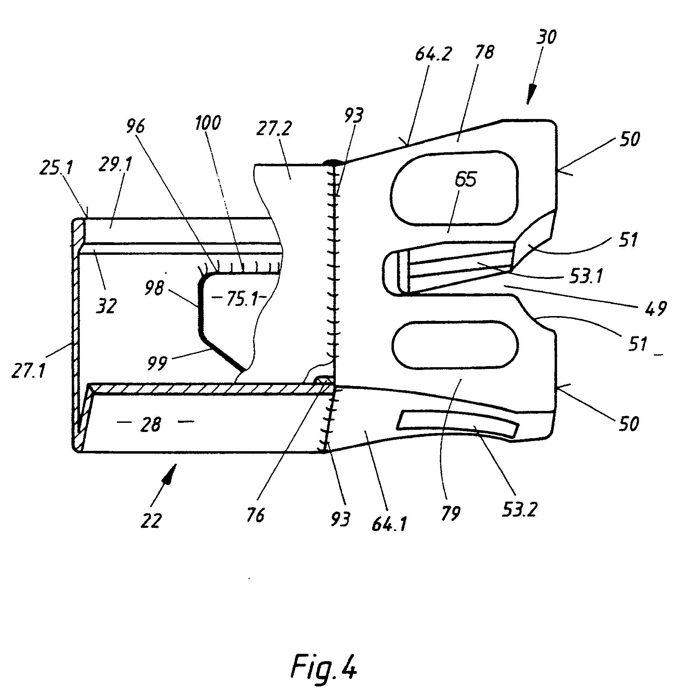

In Fig. 1 ist von einem Gerüst nur ein Teil dargestellt. Dabei tragen die Stiele 20 in einem dem Rastermaß entsprechenden Abstand voneinander Lochscheiben 21, wie sie bekannt sind und aus den Fig. 2 und 3 hervorgehen. Zwischen den beiden Stielen 20 ist eine Tragriegel 22 befestigt. Auf ihm stützt sich ein Gerüstboden 23 ab. Dieser hat an seinem Ende Einhängekrallen 24, die auf dem Auflagerand 25 des U-Profiles 26 des Tragriegels 22 in bekannter Weise aufliegen. Es wird eine nicht dargestellte, übliche Abhubsicherung angebracht.

Das U-Profil 26 hat zwei außen längsgerippte Vertikalschenkel 27.1 und 27.2, deren Innenflächen 33.1 und 33.2 im Abstand A voneinander liegen. Sie sind durch den unteren Horizontalsteg 28 verbunden. Das ganze U-Profil ist als einstückig im Strang-Preß-Verfahren hergestelltes Leichtmetall-Profil gestaltet. Es hat an seinem oberen Rand auf jeder Seite eine Auflage-Randrippe 29.1 und 29.2, die nach innen ragt, und eine kleine Vertikalwand 31.1 bzw. 31.2 bildet, die tangential in die obere Randrundung 25.1 bzw. 25.2 übergeht und in einem Abstand von wenigen mm mit einer Abschrägung 32.1 bzw. 32.2 in die Innenfläche 33.1 bzw. 33.2 des Vertikalschenkels 27.1 bzw. 27.2 übergeht.

Der Anschlußkopf 30 besteht im ganzen aus Leichtmetall und ist in einem geeigneten Gußverfahren, beispielsweise im Sandguß-, im Kokillenguß- oder im Druckgußverfahren hergestellt. Er hat eine Grundstruktur, wie sie solche Anschlußköpfe in Stahl seit langem haben. Seine einzelnen Formgestaltungen sind jedoch wesentlich genauer den auftretenden Beanspruchungen und den Festigkeitswerten des Leichtmetalls gemäß gestaltet.

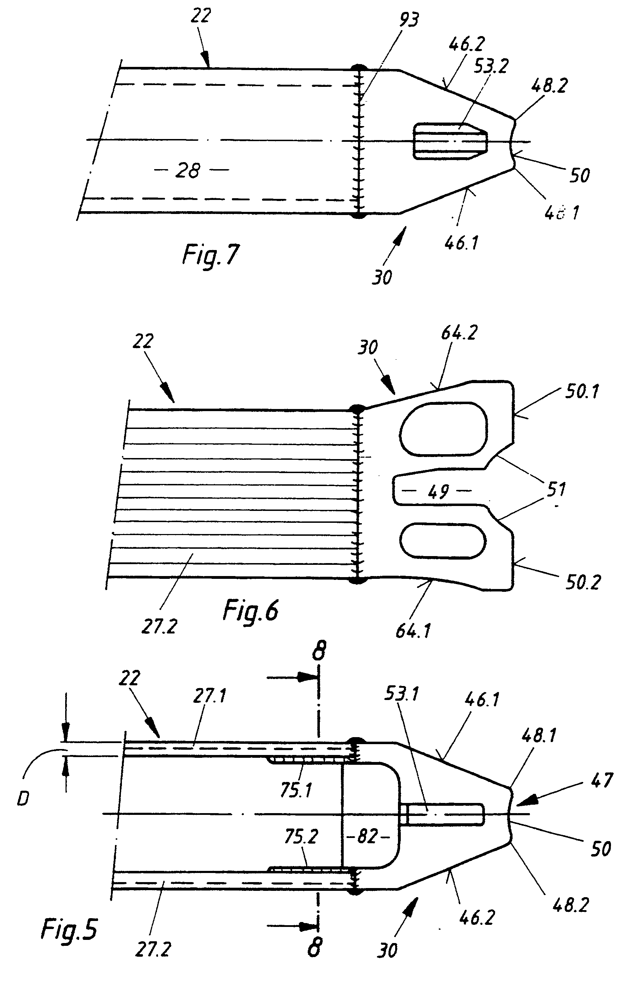

Die Anschlußköpfe 30 haben im großen und ganzen gesehen Standardkonfiguration, um sie in einem Modul-Gerüst-System verwenden zu können. Dabei sind die Seitenbegrenzungen 46.1 bzw. 46.2 — wie aus den Fig. 2, 5 und 7 ersichtlich — auf das Stiel- und Scheibenzentrum 37 zulaufend keilartig gestaltet, so daß acht unmittelbar nebeneinander liegende Anschlußmöglichkeiten gegeben sind. Die Anlagestützflächen 50 sind — wie aus den Fig. 2, 5 und 7 ersichtlich — mit dem Radius 47 der Außenwand des Stiels 20 von 24 mm konkav gewölbt und ihre Randbereiche 48.1 und 48.2 gehen mit Rundungen in die Seitenbegrenzungen 46.1 und 46.2 über, so daß es keine scharfkantigen Eindrückungen in die Rohrwand gibt, was insbesondere für das relativ wei-che Leichtmetall-Material wichtig ist.

3



Ein horizontal verlaufender Scheiben-Schlitz 49 ist außen mit einer Höhe H1 von 13 mm gestaltet und geht mit großdimensionierten Eckrundungen 51 in die Anlagestützflächen 50 über. Durch den Scheiben-Schlitz 49 und die Rundungen 51 sind die Anlagestützflächen 50 unterbrochen und auf zwei Anlagebereiche 50.1 und 50.2 aufgeteilt, welche beiderseits der jeweiligen Lochscheibe 21 an dem jeweiligen Stiel 20 zur Anlage kommen.

Die Höhe der Anlagebereiche 50.1 und 50.2 der Anlagestützfläche 50 ist — wie aus Fig. 3 ersichtlich — unterschiedlich. Die äußere untere Begrenzung 56.1 liegt von der Horizontalmittelebene 57 des Schlitzes 49 um den Abstand 58.1 nach unten, während die äußere Begrenzung 56.2 um den Abstand 58.2 von der Horizontalmittelebene 57 nach oben entfernt liegt. Dabei beträgt das Maß 58.1 vorzugsweise 34 mm und das Maß 58.2 vorzugsweise 37 mm, so daß sich eine Gesamthöhe 58.3 von 71 mm ergibt, deren Mitte gegenüber der Horizontal-Mittelebene 57 geringfügig nach oben versetzt ist, womit etwa gleiche Abstände 61 zum aus Fig. 3 ersichtlichen Keilanlagebereich 60 resultieren, so daß die aufgebrachten Momente mit gleichen Hebelarmen und damit mit etwa gleichen Abstützkräften auf das Rohr und den Anschlußkopf wirken. Da die Belastungen einerseits unterschiedlich und andererseits wechselnd sind und es sich nicht um einen Gelenkanschluß, jedoch auch nicht um einen starren Anschluß, sondern um einen relativ elastischen, in mehreren Ebenen wirksamen Anschluß handelt, in den auch die Vorspannkräfte eingehen, ist man bei der Dimensionierung weitgehend auf Erfahrungen, Versuche und teilweise Modellrechnungen angewiesen, um optimale Gestaltungen zu finden. Die vorgenannten Abmessungen werden diesen Bedürfnissen in hervorragender Weise an einem Anschlußkopf 30 aus Leichtmetall gerecht.

Während der vordere Anlagebereich des Anschlußkopfes 30 eine langgestreckt, rechteckige Gestalt aufweist, hat die hintere Anschluß-Stirnfläche 63 zweckmäßig breite U-förmige Rechteck-Gestalt, die der Form der U-förmigen Tragriegel 22 entspricht. Während die Seitenbegrenzungslinien 46.1 und 46.2 geradlinig keilförmig bis zu der Anschluß-Stirnfläche 63 verlaufen, sind die obere Begrenzungslinie 64.2 und die untere Begrenzungslinie 64.1 beim Ausführungsbeispiel leicht geschwungen gestaltet, so daß sich der Kopf im allgemeinen allmählich auf die Breite und die Höhe des angeschweißten, langgestreckten Leichtmetall-U-Profiles 26 reduziert. Die untere Begrenzungslinie 64.1 ist etwas konkav gewölbt. Die obere Begrenzungslinie 64.2 ist zur Aufnahme eines parallel zum Tragriegel 22 zu legenden, etwa geraden Keiles 34 mit Niet 68 als Verliersicherung etwas konvex gewölbt.

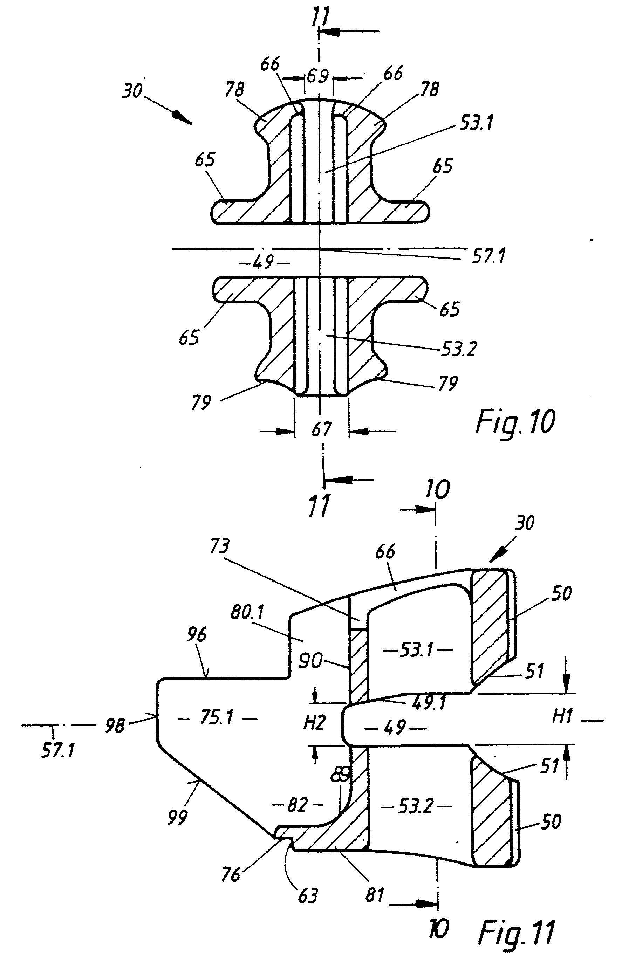

Beiderseits des Scheiben-Schlitzes 49 sind nur noch flache Schenkel 65 stehengeblieben, wie sie aus Fig. 10 ersichtlich sind. Diese verlaufen außen nach den Begrenzungslinien 46.1 bzw. 46.2 und haben eine Dicke zwischen etwa 5 und 8 mm. Sie dienen der Begrenzung des Scheiben-Schlitzes 49 und der Sicherung des Anschlußkopfes 30 gegen Verdrehen um die Mittelachse 57.1 seiner Anschluß-Stirnfläche 63 bzw. des U-Profiles 26.

Senkrecht zum Scheiben-Schlitz 49 erstrecken sich durch den Anschlußkopf 30 die Keilöffnungen 53, die bis zu den Halterippen 66 eine Breite 67 aufweisen, die etwas größer als die Querausdehnung des Nietes 68 des Keiles 34 ist, so daß der Keil 34 einwandfrei auf- und abbewegt werden kann. Zwischen den Halterippen 66 hat die Keilöffnung 53.1 nur eine Breite 69, die größer als die Dicke 71 des Keiles 34, jedoch geringer als die Länge des Niets 68 ist, so daß dieser der Sicherung gegen Herausfallen dient, andererseits das Hochziehen des Keiles 34 über den Scheiben-Schlitz 49 gestattet, wobei das Ende 34.2 des Keiles 34 — wie aus Fig. 3 ersichtlich — mit einer Randausnehmung 72 versehen ist, um den Keil 34 für den Transport in etwa parallel zum Tragriegel 22 legen können. Dafür ist in der Oberseite des Kopfes eine Aussparung 73 ausgebildet. Im Bereich der Halterippen 66 sind außen noch kleine zum U-Profil 26 hin größer werdende Wülste 78 vorgesehen. Entsprechende Aussenwülste 79 sind unten am Anschlußkopf 30 ausgebildet. Sie sind alle vier so gestaltet, daß ausreichende Querschnitte für die Kraftübertragung vorhanden sind, jedoch keine überflüssigen, das Gewicht erhöhenden Materialansammlungen. Dabei sind Vertiefungen zwischen diesen Wülsten 78 und 79 und den Schenkeln 65 ausgebildet.

An die U-förmige, nach oben offene Anschluß-Stirnfläche 63 schließen sich innenliegend die beiden Schweißlappen 75.1 und 75.2 und unten die Schweiß-Hilfs-Rippe 76 an. Sie haben von der Außenkante 77.1 bis 77.2 der Anschluß-Stirnfläche 63 nach innen einen Abstand, der der Dicke d der Seitenwände 27.1, 27.2 und des Horizontalsteges 28 entspricht und haben nach innen eine Dicke D von etwa 3,5 bis 4 mm, so daß sich für die Endwände 80.1, 80.2 und den Endsteg 81 des Anschluß-Hohlraum 82 des Anschlußkopfes 30 Wandstärken von etwa 8 mm ergeben, die mit Rundungen 89 in die gegenüber der Anschluß-Stirnfläche um ca 12 mm nach innen versetzte Endwand 90 des Anschlußkopfes 30 übergeben. Die vom Scheiben-Schlitz 49 horizontal geteilte Endwand 90 trennt Anschluß-Hohlraum 82 und Keilöffnungen 53.1 und 53.2 und gibt dadurch dem ganzen Anschlußkopf 30 trotz geringen Gewichtes hohe Stabilität und Festigkeit.

Im Bereich des Durchbruches durch die Endwand 90 ist der Scheiben-Schlitz 49 gemäß der geneigten oberen Innenbegrenzung 49.1 auf das Maß H2 verjüngt, so daß die Lochscheibe 21 genau Platz hat und nur ein ganz geringfügiges Spiel verbleibt. In diesem Bereich hoher Kräfte werden durch die vergrößerte Materialan-

4

häufung die Spannungen verringert. Trotzdem ist der Scheiben-Schlitz im Einführbereich gemäß der Höhe H1 ausreichend hoch, um den Anschlußkopf 30 leicht auf die Lochscheibe 21 aufzustecken.

Wie insbesondere aus Fig. 4 ersichtlich, ist der Anschlußkopf mit seiner Anschluß-Stirnfläche 63 bis an die rechtwinklig abgeschnittenen Vertikalschenkel 27.1 und 27.2 des U-Profiles 26 stirnseitig angestoßen und außen ringsum mit der Außen-Naht 93 verschweißt. Dabei sind die Ränder 92 der Anlage-Stirnfläche 63 nach außen mit leichten Rundungen 94 gestaltet, so daß sich ein kleiner, etwa V-förmiger Hohlraum ergibt und eine Mischform einer Naht zwischen V-Naht und Stumpfnaht beim Schweißen gebildet wird. Da die Schweißlappen 75.1 und 75.2 innen unmittelbar an den Innenflächen 33.1 und 33.2 der Vertikalschenkel 27.1 und 27.2 anliegen, ist hier beim Schweißen das flüssigwerdende Material einwandfrei abgestützt. Im oberen Bereich der Auflage-Randrippe 29.1 und 29.2 ist ohnehin ausreichend Material vorhanden, um eine einwandfreie Verschweißung zu ergeben. Der untere Teil der Außen-Naht 93 zwischen Anschlußkopf 30 und Horizontalsteg 28 wird innenliegend durch die Schweiß-Hilfs-Rippe 95 gestützt und gegen Weglaufen des flüssig werdenden Leichtmetalles unter Bildung eines Schweißbades geschützt. Dadurch wird bei geringstmöglicher Wärmebelastung eine einwandfreie Schweißverbindung ermöglicht.

Die Schweißlappen 75.1 und 75.2 sind, wie ersichtlich, mit einer oberen horizontal verlaufenden Schweißnaht-Kante 96 gebildet. Diese liegt parallel unterhalb der verstärkten und nach innen abgeschrägten Auflage-Randrippe 29.1 bzw. 29.2, so daß ein V-förmiger Aufnahmeraum für eine geeignete Ausbildung einer V-Naht vorhanden ist, andererseits jedoch hinreichend Abstand zum oberen Auflagerand 25 besteht, so daß dieser durch Wärmeeinwirkungen nicht allzusehr geschwächt wird. Die Endbegrenzung 98 der Schweißlappen 75.1 und 75.2 verläuft senkrecht nur über einen Teil der Höhe und geht in eine schräge Unterkante 99, die bis auf den durch den Horizontalsteg 28 gebildeten Grund des U-Profiles 26 reicht. Wie aus Fig. 4 ersichtlich, sind die Endbegrenzung 98 und die schräge Unterkante 99 nicht durch Schweißung befestigt. Die leicht anzubringende, oben liegende Schweißnaht 100 reicht für die innere Befestigung aus. Die Schweißlappen 75.1 und 75.2 nehmen im Innern des U-Profiles keinen nennenswerten Raum ein, sodaß die Einhängekrallen 24 auch im Bereich der äußeren Enden der Tragriegel 22 nicht behindert sind.

Der Tragriegel (22) für die Auflage von Gerüstböden in Gerüsten mit Stielen, die Lochscheiben zur Befestigung der Anschlußköpfe (30) tragen, besteht aus einem Leichtmetall-U-Profil mit Auflage-Randrippen (29.1) an den Vertikalschenkeln (27.1, 27.2). Der in vielen Bereichen raumsparend unter optimaler Gestaltung geformte Anschlußkopf mit einem Scheiben-Schlitz (49) hat Schweißlappen (75.1), die an den Innenflächen der Vertikalschenkel (27.1) anliegen und an diesen mit einer oben liegenden Schweißnaht (100) befestigt sind.

## Patentansprüche

1. Anschlußausbildung für Horizontalträger (22) von Gerüstböden (23) bestehend aus einem Profil (26), einer Scheibe (21) und einem Anschlußkopf (30) an Gerüsten mit vertikalen Stielen (20), welche im einem Rastersystem entsprechenden Abstand horizontale Lochscheiben (21) aufweisen, auf die Anschlußköpfe (30) von der Tragstruktur dienenden Gerüstelementen aufsteckbar und mit durchsteckbaren Keilen (34) sicherbar sind, wobei die Anschlußköpfe (30) mit ihren vertikalen Seitenflächen (46.1, 46.2) keilartig zusammenlaufend ausgebildet sind, etwa in der Vertikal-Mitte einen horizontalen Scheiben-Schlitz (49) zum Aufstecken auf die Lochscheiben (21) aufweisen und in ihren oberen und unteren Stützteilen mit vertikal durchlaufenden Keilöffnungen (53.1, 53.2) versehen sind, **dadurch gekennzeichnet,** daß die Anschlußköpfe (30) aus gegossenem Leichtmetall bestehen und jeweils eine zu einem nach oben offenen, aus Leichtmetall bestehenden U-Profil (26) passende, für das Verschweißen geeignete Ausbildung des Verbindungsbereiches aufweisen, wobei an jeder Wand des U-Profils (26) ein nach innen ragender Schweißlappen (75.1, 75.2) des Anschlußkopfes (30) anliegt, dessen Schweißnaht-Kante (96) parallel unterhalb der verstärkten und innen unten abgeschrägten Auflage-Randrippe (29.1, 29.2) des U-Profiles (26) liegt und wobei der dem unteren Horizontalsteg (28) des U-Profils anliegende Kopfbereich eine in das Innere des U-Profils reichende Schweiß-Hilfs-Rippe (76) aufweist und wobei der Scheiben-Schlitz (49) im Bereich seines inneren Grundes (49.1) sich auf das Maß (H2) der Scheibendicke (35) verjüngend gestaltet ist und die mit Vertiefungen gebildeten Profilgestaltungen der Außenflächen des Kopfes versteifende Randbereiche (65 ; 78, 79) neben den Keilöffnungen (53.1, 53.2) aufweisen.

## Claims

1. Arrangement for connecting horizontal carriers (22) of scaffolding platforms (23), comprising a profile (26), a disc (21) and a connecting head (30), to scaffolding with vertical poles (20) having horizontal perforated discs (21) at a distance corresponding with a raster system, onto which discs are pushed and secured with wedges (34) passing through, connecting heads (30) of ths scaffold elements which serve the support structure, whereby the connecting heads (30) are constructed to run together with their vertical lateral surfaces (46.1, 46.2), having approximately in the vertical middle a horizontal disc-slot (49) for pushing onto the perforated discs (21) and being provided in their upper and lower support members with wedge apertures (53.1, 53.2) which pass through vertically, characterised in that the connecting heads (30) are made of cast light alloy, have a suitable construction of the connecting region, which matches an upwardly open U-profile (26) of light alloy and is suitable for welding, whereby and inwardly extending welding flap (75.1, 75.2) of the connecting head (30) abuts each wall of the U-profile (26), the welding-seam edge (96) of which is positioned parallel underneath the reinforced and, at the bottom, internally slanted abutment-edge rib (29.1, 29.2) of the U-profile (26), and whereby the head region which abuts the lower horizontal web (28) of the U-profile comprises a welding-aid rib (76) extending inside the U-profile, and whereby the disc slot (49) is constructed to narrow in the region of its inner bottom (49.1) to the size (H2) of the disc thickness (35), and the recessed profile arrangement of the outside surfaces of the head have stiffening edge regions (65 ; 89, 79) next to the wedge apertures (53.1, 53.2).

## Revendications

1. Agencement de raccordement pour traverses horizontales (22) de plateaux d'échafaudage (23) consistant en un profilé (26), un disque (21) et une tête de raccordement (30), sur des échafaudages comportant des montants verticaux (20) qui présentent à des distances correspondant à un système de réseau des disques perforés (21) horizontaux sur lesquels les têtes de raccordement (30) des éléments d'échafaudage servant à la structure de support peuvent être montées et fixées par des clavettes (34) insérables, les têtes de raccordement (30) étant agencées de manière convergente en forme de coin au niveau de leurs surfaces latérales verticales (46.1, 46.2), présentant sensiblement au centre vertical une fente horizontale (49) pour disque destinée à être appliquée sur les disques perforés (21), et étant munies dans leurs parties de soutien supérieures et inférieures d'ouvertures pour clavette verticales traversantes (53.1, 53.2), caractérisé en ce que les têtes de raccordement (30) consistent en métal léger coulé et présentent chacune un agencement du domaine de liaison convenant au soudage et adapté à un profilé en U (26) consistant en métal léger et ouvert vers le haut, une patte de soudage (75.1, 75.2) de la tête de raccordement (30), qui fait saillie vers l'intérieur, reposant sur chaque paroi du profilé en U (26) et présentant une arête de cordon de soudure (96) située parallèlement sous la nervure marginale d'appui (29.1, 29.2) du profilé en U (26) qui est renforcée et biseautée à l'intérieur vers le bas, et le domaine de la tête qui repose sur la nervure horizontale inférieure (28) du profilé en U présentant une nervure auxiliaire de soudage (76) pénétrant à l'intérieur du profilé en U, et la fente pour disque (49) se rétrécissant dans le domaine de son fond interne (49.1) pour coïncider avec la valeur (H2) de l'épaisseur (35) du disque, et les agencements profilés des surfaces externes de la tête qui sont munis d'évidements présentant des domaines marginaux de renforcement (65 ; 78 ; 79) à côté des ouvertures pour clavette (53.1, 53.2).

Fig.1

7

Fig.2

Fig.3

*Fig.4*

Fig.7

Fig.6

Fig.5

Fig.8

Fig.9

Fig.10

Fig.11